# DEMANDE DE BREVET EUROPEEN

(11) **EP 1 676 721 A1**
(43) Date de publication de la demande: **05.07.2006**
(21) Numéro de dépôt: 04300737.6
(22) Date de dépôt: 27.10.2004
(51) Int. Cl.: B60B 17/00

(54) **Roue de véhicule ferroviaire, et bogie de véhicule ferroviaire correspondant**

(30) Priorité: 14.11.2003 FR 0313346
(71) Demandeur: ALSTOM, 92300 Levallois-Perret (FR)
(72) Inventeur: NAST, Jean-Daniel, 71200, Le Creusot (FR)
(74) Mandataire: Blot, Philippe Robert Emile

(57) **Abrégé**

Cette roue (2), qui est destinée à être utilisée avec un rail présentant une inclinaison de 1/20, comprend une zone de roulement (8) destinée à venir en contact avec le rail, un boudin latéral (12), faisant saillie radialement vers l'extérieur par rapport à la bande de roulement (6), ainsi qu'une portion de liaison (14) présentant une conicité qui augmente continûment en direction du boudin (12).

La zone de roulement (8) présente, vue en coupe transversale, un tronçon plan (8A) dont la conicité est comprise entre 0,052 et 0,058, ce qui assure un auto-centrage satisfaisant du véhicule ferroviaire.

## Description

La présente invention concerne une roue de véhicule ferroviaire, ainsi qu'un bogie de véhicule ferroviaire comprenant de telles roues.

De façon classique, une roue de véhicule ferroviaire comporte une bande de roulement périphérique, qui est pourvue d'une zone de roulement destinée à entrer en contact avec un rail correspondant. Il est en outre prévu un boudin latéral, placé du côté intérieur, qui fait saillie radialement par rapport à la bande de roulement précitée. Un tel boudin assure notamment une fonction de guidage, en ce sens que sa présence est à même d'empêcher le déraillement du véhicule ferroviaire.

La zone de roulement évoquée ci-dessus présente un profil globalement tronconique, dont le diamètre augmente progressivement en direction du boudin. Il est par ailleurs prévu une portion de liaison, assurant le raccordement entre la zone de roulement et le boudin. Cette portion de liaison affecte, en coupe transversale, une forme incurvée en ce sens que son diamètre augmente de façon plus rapide que celui de la zone de roulement.

Une roue de véhicule ferroviaire, du type décrit ci-dessus, est par exemple connue de EP-A-0 008 528. Selon l'enseignement de ce document, le diamètre de la bande de roulement, du côté de la voie, augmente continuellement en direction de la portion de liaison, le taux d'augmentation du diamètre de cette bande décroissant cependant en direction de cette portion de liaison.

Ceci étant précisé, l'invention propose de réaliser une roue de véhicule ferroviaire, qui offre un confort accru par rapport à celles développées jusqu'à présent dans l'art antérieur.

A cet effet, elle a pour objet une roue de véhicule ferroviaire, destinée à être utilisée avec un rail présentant une inclinaison de 1/20, cette roue comprenant une bande périphérique de roulement qui comporte une zone de roulement destinée à venir en contact avec le rail, cette zone de roulement présentant, vue en coupe transversale, un tronçon plan, la roue comprenant en outre un boudin latéral, faisant saillie radialement vers l'extérieur par rapport à la bande de roulement, ainsi qu'une portion de liaison raccordant le tronçon plan et le boudin, au niveau d'un point d'inflexion, cette portion de liaison présentant une conicité qui augmente continûment en direction du boudin, caractérisée en ce que la conicité dudit tronçon plan est comprise entre 0,052 et 0,058.

Selon d'autres caractéristiques de l'invention :
- la conicité du tronçon plan est comprise entre 0,054 et 0,056, notamment égale à 0,055 ;
- la distance séparant la portion de liaison et le milieu d'un segment de droite, passant par les deux extrémités de cette portion de liaison, est comprise entre 2,90 et 3,10 mm ;
- cette distance est comprise entre 2,95 et 3,05 mm, notamment égale à 3,00 mm ;
- la distance séparant une ligne de roulement de l'extrémité du tronçon plat, adjacente au boudin, est comprise entre 8,90 et 9,30 mm, de préférence entre 9,00 et 9,20 mm ;
- cette distance est égale à 9,10 mm ;
- l'angle entre une tangente au point d'inflexion et une droite, parallèle à l'axe principal de la roue et passant par une ligne de roulement de la roue, est compris entre 68,10 et 68,70°, de préférence entre 68,30 et 68,50° ;
- ledit angle est égal à 68,40°.

L'invention a également pour objet un bogie de véhicule ferroviaire, comprenant un châssis, ainsi que des roues montées sur des essieux, supportant ce châssis, caractcrisé en ce que chaque roue est telle que définie ci-dessus.

L'invention va être décrite ci-après, en référence aux dessins annexés, donnés uniquement à titre d'exemple non limitatif, dans lesquels la figure unique est une vue en coupe diamétrale, illustrant une roue de véhicule ferroviaire conforme à l'invention.

La figure unique illustre une roue 2 de véhicule ferroviaire, conforme à l'invention, qui est destinée à circuler sur un rail non représenté, de façon connue en soi. Conformément à l'invention, ce rail présente une inclinaison de 1/20, soit un vingtième, au sens classique du domaine technique de la pose des voies.

Cette roue 2 possède un axe principal non représenté, qui est en l'occurrence horizontal. Elle est également pourvue d'une bande de roulement périphérique, désignée dans son ensemble par la référence 6.

Cette bande de roulement 6 comprend une zone de roulement 8, s'étendant autour d'une ligne périphérique de roulement 10. Cette dernière est formée de façon classique par l'ensemble des points de contact de la roue 2 avec le rail, lorsque celle-ci se trouve dans sa position centrale, correspondant à un roulement normal. On note Y la droite horizontale passant par cette ligne de roulement 10.

La roue 2 est également pourvue, du côté intérieur, d'un boudin 12, faisant saillie radialement par rapport à la bande de roulement 6. La présence de ce boudin 12 assure, de façon connue, une fonction de guidage de la roue, de manière à éviter le déraillement du véhicule ferroviaire.

Il est par ailleurs prévu une portion de liaison 14, raccordant la zone de roulement 8 et le boudin 12. Le profil incurvé de cette portion de liaison 14 sera décrit plus en détail dans ce qui suit.

Enfin, la roue 2 est pourvue, à l'opposé du boudin 12, d'une portion latérale 16, prolongeant la zone de roulement 8. Cette portion 16 s'amincit, de façon connue en tant que telle, à l'opposé du boudin 12, en présentant une pente plus accentuée que celle de la zone de roulement 8.

La zone de roulement 8 possède, en coupe transversale, un tronçon plan 8A, s'étendant selon la droite X, dont la pente constante est voisine, dans l'exemple en référence, de 5,5 %. Ceci signifie donc que le rapport (D₂-D₁/L) entre, d'une part, la différence des deux diamètres d'extrémité D₂ et D₁ de ce tronçon 8A et, d'autre part, la distance L les séparant, mesurée selon l'axe principal horizontal de la roue, est égale à 0,055. Ceci signifie également, en d'autres termes, que la conicité de ce tronçon 8A est de 0,055.

Cette valeur de 0,055 est bien évidemment donnée à titre non limitatif, en référence à l'exemple de lafigure 1

On peut également prévoir que la conicité de ce tronçon 8A présente des valeurs différentes de celle évoquée ci-dessus, en étant avantageusement comprise entre 0,052 et 0,058, de préférence entre 0,054 et 0,056.

Dans l'exemple illustré, la distance 1 séparant la ligne de roulement 10 et l'extrémité du tronçon 8A adjacente au boudin 14, est égale à 9,10 mm. A titre de variante, cette distance 1 est comprise entre 8,90 et 9,30 mm, de préférence entre 9,00 et 9,20 mm.

La portion de liaison 14 relie les extrémités en regard du tronçon plan 8A et du boudin 12. Elle se raccorde à ce boudin au niveau d'un point d'inflexion noté P. On note par ailleurs T la tangente à la courbe précitée, en ce point d'inflexion.

Il est à remarquer que la conicité, telle que définie ci-dessus, de la portion de liaison 14 augmente continûment depuis le tronçon plan 8A vers le boudin 12. La pente de cette portion de liaison 14 augmente donc, en partant d'une valeur de 5,5% au niveau du raccord avec le tronçon plan 8A.

On note par ailleurs S le segment de droite reliant les deux extrémités du tronçon de liaison 14, au niveau de ses raccords respectifs avec le tronçon plan 8A et le boudin 12. On note également M le milieu de ce segment S, ainsi que d la distance séparant ce milieu M et la portion de liaison 14.

Dans l'exemple illustré, cette distance d est égale à 3,00 mm. Cependant, on peut prévoir que cette distance présente des valeurs différentes de celles mentionnées ci-dessus. Dans cet esprit, elle est alors avantageusement comprise entre 2,90 et 3,10 mm, de préférence entre 2,95 et 3,05 mm.

Par ailleurs, l'angle ∝, entre la tangente T et la droite horizontale Y, est voisin de 68,40° dans l'exemple illustré. Cet angle ∝ est avantageusement compris entre 68,10 et 68,70°, de préférence entre 68,30 et 68,50°.

Dans l'art antérieur, conforme à l'enseignement de EP-A-0 008 538 évoqué ci-dessus, le tronçon plan de la zone de roulement de la roue présente une conicité inférieure à celle du tronçon 8A de l'invention. De façon plus précise, dans cette zone particulière, la roue de l'art antérieur présente une conicité voisine de 0,05.

L'existence d'une conicité plus élevée confère des avantages substantiels à la roue de l'invention. En effet, cette dernière est ainsi à même de s'opposer, de façon plus satisfaisante que dans l'art antérieur, aux mouvements transversaux subis par le véhicule ferroviaire, ce qui garantit un auto-centrage rapide de ce dernier.

Par ailleurs, il est à remarquer que la droite, reliant dans la roue de l'art antérieur les deux extrémités de la portion de liaison, est plus éloignée de cette portion de liaison que dans l'invention. En d'autres termes, la distance séparant cette droite et cette portion de liaison est bien supérieure à la distance d séparant, dans l'invention, la portion de liaison 14 et le segment S.

Par conséquent, la portion de liaison 14 de la roue 2 conforme à l'invention définit un renfoncement, noté R sur la figure, qui est moins creusé que celui existant dans l'art antérieur. Cette mesure est avantageuse, étant donné qu'elle évite, lors des mouvements transversaux de la roue, que le boudin 12 ne tape brutalement contre l'extrémité en regard du rail. Ceci permet donc de garantir un confort satisfaisant aux passagers du véhicule.

A titre d'exemple non limitatif, les coordonnées des points, formant le profil de la roue conforme à l'invention, sont consignées ci-après. L'axe des abscisses est confondu avec la droite Y évoquée ci-dessus, alors que l'axe des ordonnées est formé par la droite Z, perpendiculaire à celle Y, passant par le côté latéral 12A du boudin 12.

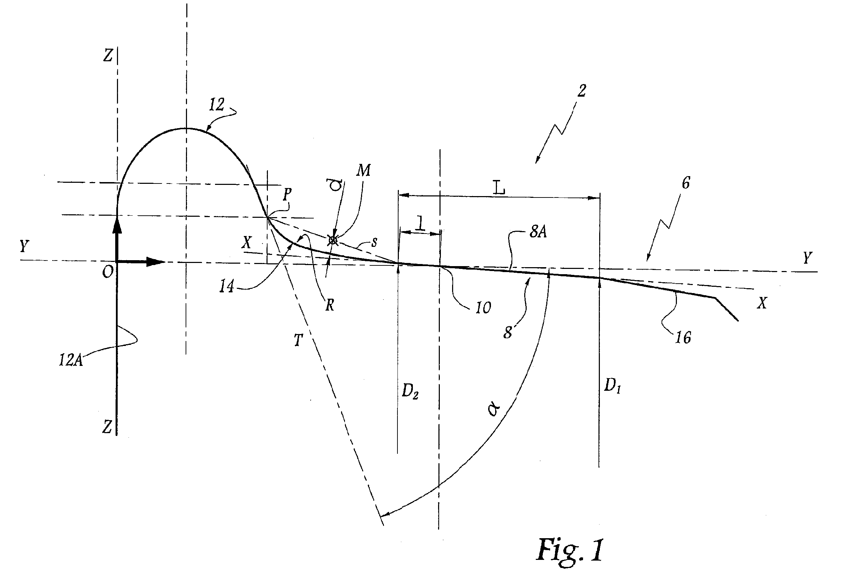

Dans ces conditions, l'origine des coordonnées est le point O, correspondant à l'intersection des droites Y et Z précitées, les abscisses Y augmentant vers la droite de la figure 1 alors que les ordonnées Z augmentent vers le haut de cette même figure. Le tableau ci-après illustre notamment les coordonnées des points au niveau du boudin 12 et de la portion de liaison 14.

| Y | Z |
|---|---|
| 3.272 | 21.631 |
| 4.156 | 22.776 |
| 5.040 | 23.879 |
| 5.924 | 24.897 |
| 6.808 | 25.788 |
| 7.692 | 26.535 |
| 8.576 | 27.152 |
| 9.460 | 27.656 |
| 10.345 | 28.063 |
| 11.229 | 28.389 |
| 12.113 | 28.642 |
| 12.997 | 28.826 |
| 13.881 | 28.942 |
| 14.765 | 28.994 |
| 15.649 | 28.984 |
| 16.533 | 28.913 |
| 17.417 | 28.774 |
| 18.301 | 28.561 |
| 19.185 | 28.266 |
| 20.069 | 27.882 |
| 20.953 | 27.403 |
| 21.838 | 26.827 |
| 22.722 | 26.158 |
| 23.606 | 25.400 |
| 24.490 | 24.555 |
| 25.374 | 23.619 |
| 26.258 | 22.566 |
| 27.142 | 21.371 |
| 28.026 | 20.003 |
| 28.910 | 18.406 |
| 29.794 | 16.500 |
| 30.678 | 14.281 |
| 31.562 | 12.068 |
| 32.447 | 10.206 |
| 33.331 | 8.723 |
| 34.215 | 7.542 |
| 35.099 | 6.590 |
| 35.983 | 5.827 |
| 36.867 | 5.216 |
| 37.751 | 4.722 |
| 38.635 | 4.311 |
| 39.519 | 3.960 |
| 40.403 | 3.660 |
| 41.287 | 3.400 |
| 42.171 | 3.169 |
| 43.056 | 2.957 |
| 43.940 | 2.756 |
| 44.824 | 2.566 |
| 45.708 | 2.386 |
| 46.592 | 2.216 |
| 47.476 | 2.055 |
| 48.360 | 1.903 |
| 49.244 | 1.761 |
| 50.128 | 1.626 |
| 51.012 | 1.500 |
| 51.896 | 1.381 |

## Revendications

1. Roue (2) de véhicule ferroviaire, destinée à être utilisée avec un rail présentant une inclinaison de 1/20, cette roue comprenant une bande périphérique de roulement (6) qui comporte une zone de roulement (8) destinée à venir en contact avec le rail, cette zone de roulement présentant, vue en coupe transversale, un tronçon plan (8A), la roue comprenant en outre un boudin latéral (12), faisant saillie radialement vers l'extérieur par rapport à la bande de roulement (6), ainsi qu'une portion de liaison (14) raccordant le tronçon plan (8A) et le boudin (12), au niveau d'un point d'inflexion (P), cette portion de liaison (14) présentant une conicité qui augmente continûment en direction du boudin (12), **caractérisée en ce que** la conicité (D₂-D₁/l) dudit tronçon plan (8A) est comprise entre 0,052 et 0,058.

2. Roue selon la revendication 1, **caractérisée en ce que** la conicité (D₂-D₁/l) du tronçon plan (8A) est comprise entre 0,054 et 0,056, notamment égale à 0,055.

3. Roue selon la revendication 1 ou 2, **caractérisée en ce que** la distance (d) séparant la portion de liaison (14) et le milieu (M) d'un segment de droite (S), passant par les deux extrémités de cette portion de liaison (14), est comprise entre 2,90 et 3,10 mm.

4. Roue selon la revendication 3, **caractérisée en ce que** cette distance (d) est comprise entre 2,95 et 3,05 mm, notamment égale à 3,00 mm.

5. Roue selon l'une des revendications précédentes, **caractérisée en ce que** la distance (1) séparant une ligne de roulement (10) de l'extrémité du tronçon plat (8A), adjacente au boudin (12), est comprise entre 8,90 et 9,30 mm, de préférence entre 9,00 et 9,20 mm.

6. Roue selon la revendication 5, **caractérisée en ce que** cette distance est égale à 9,10 mm.

7. Roue selon l'une quelconque des revendications précédentes, **caractérisée en ce que** l'angle (∝), entre une tangente (T) au point d'inflexion (P) et une droite (Y), parallèle à l'axe principal de la roue et passant par une ligne de roulement (10) de la roue, est compris entre 68,10 et 68,70°, de préférence entre 68,30 et 68,50°.

8. Roue selon la revendication 7, **caractérisée en ce que** ledit angle (∝) est égal à 68,40°.

9. Bogie de véhicule ferroviaire, comprenant un châssis, ainsi que des roues montées sur des essieux, supportant ce châssis, **caractérisé en ce que** chaque roue est conforme à l'une quelconque des revendications précédentes.
